(19) Europäisches Patentamt
European Patent Office
Office européen des brevets

(11) **EP 3 625 529 B1**

(12) **FASCICULE DE BREVET EUROPEEN**

(45) Date de publication et mention de la délivrance du brevet:
**29.06.2022 Bulletin 2022/26**

(21) Numéro de dépôt: **18735634.0**

(22) Date de dépôt: **16.05.2018**

(51) Classification Internationale des Brevets (IPC):
**G01L 5/24** *(2006.01)*

(52) Classification Coopérative des Brevets (CPC):
**G01L 5/246**

(86) Numéro de dépôt international:
**PCT/FR2018/051181**

(87) Numéro de publication internationale:
**WO 2018/211217 (22.11.2018 Gazette 2018/47)**

(54) **DISPOSITIF DE CONTRÔLE DE SERRAGE PAR ULTRASONS ET PROCÉDÉ METTANT EN OEUVRE LE DISPOSITIF**

VORRICHTUNG ZUR PRÜFUNG EINER KLEMMVORRICHTUNG DURCH ULTRASCHALL UND VERFAHREN ZUR IMPLEMENTIERUNG DER VORRICHTUNG

DEVICE FOR INSPECTING CLAMPING MEANS BY ULTRASOUNDS AND METHOD IMPLEMENTING THE DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.05.2017 FR 1754346**

(43) Date de publication de la demande:
**25.03.2020 Bulletin 2020/13**

(73) Titulaire: **Centre Technique Des Industries Mecaniques**
**60300 Senlis (FR)**

(72) Inventeurs:
• **WALASZEK, Henri**
  **95360 Montmagny (FR)**
• **BOUTEILLE, Patrick**
  **60700 Pontpoint (FR)**

(74) Mandataire: **Fédit-Loriot**
  **22, rue du Général Foy**
  **75008 Paris (FR)**

(56) Documents cités:
**WO-A1-2018/211217    JP-A- H07 333 085**

• **Henri Walaszek ET AL: "Ultrasonic Stress Measurement: Application to Preload Assessment on Already Tightened Bolts", Materials Science Forum, 1 janvier 2006 (2006-01-01), pages 459-464, XP055447061, DOI: 10.4028/www.scientific.net/MSF.524-525.459 Extrait de l'Internet: URL:http://www.ndt.net/article/wcndt2016/p apers/tu1c1.pdf [extrait le 2018-02-01]**
• **MILOS VASILJEVIC ET AL: "Pipe wall damage detection by electromagnetic acoustic transducer generated guided waves in absence of defect signals", THE JOURNAL OF THE ACOUSTICAL SOCIETY OF AMERICA, vol. 123, no. 5, 1 mai 2008 (2008-05-01), pages 2591-2597, XP055447049, New York, NY, US ISSN: 0001-4966, DOI: 10.1121/1.2902188**
• **Henri Walaszek ET AL: "Ultrasonic Stress Measurement: Application to Preload Assessment on Already Tightened Bolts", Materials Science Forum, 1 January 2006 (2006-01-01), pages 459-464, XP055447061, DOI: 10.4028/www.scientific.net/MSF.524-525.459 Retrieved from the Internet: URL:http://www.ndt.net/article/wcndt2016/p apers/tu1c1.pdf**

- **Milos Vasiljevic ET AL: "Pipe wall damage detection by electromagnetic acoustic transducer generated guided waves in absence of defect signals", The Journal of the Acoustical Society of America, vol. 123, no. 5, 1 May 2008 (2008-05-01), pages 2591-2597, XP055447049, 2 Huntington Quadrangle, Melville, NY 11747 ISSN: 0001-4966, DOI: 10.1121/1.2902188**

# Description

La présente invention se rapporte à un dispositif de contrôle de serrage par ultrasons, adapté à être couplé électromagnétiquement à un élément de serrage à contrôler, de type vis, boulon ou goujon par exemple, soumis à une contrainte mécanique de serrage que l'on cherche à déterminer.

Le serrage contrôlé par ultrason est une technique fiable et non destructive bien connue. Elle est basée sur la dépendance de la vitesse de propagation des ondes ultrasonores avec l'état de la contrainte dans la vis ou le boulon. Le caractère non destructif et le coût des équipements sont les avantages principaux favorisant l'utilisation de cette technique.

La mesure est habituellement réalisée grâce à un traducteur ultrasonore couplé à une extrémité de l'élément de serrage à inspecter, qui est à la fois émetteur et détecteur. Ainsi, le traducteur génère une onde ultrasonore qui est transmise dans l'élément de serrage et le traducteur est en outre conçu pour détecter l'écho de l'onde réfléchie par l'extrémité opposée de l'élément de serrage. La mesure effectuée fournit le temps de propagation aller-retour de l'onde ultrasonore dans l'élément de serrage, dit encore temps de vol.

Le temps de vol dans l'élément serré est affecté par l'état de contrainte mécanique au sein de l'élément de serrage et est différent du temps de vol, sans contrainte, soit avant serrage. En effet, la contrainte mécanique due au serrage a pour conséquences deux phénomènes : un allongement physique de l'élément de serrage et une variation de la vitesse de propagation de l'onde ultrasonore, connu sous le nom de l'effet acousto-élastique. Aussi, après serrage, l'influence combinée de la contrainte sur l'allongement et la célérité acoustique va avoir pour conséquence une variation du temps de vol de l'onde ultrasonore par rapport à la situation avant serrage. Un étalonnage acousto-élastique préalable permet d'établir la relation entre la vitesse et la contrainte.

Dans le cadre des applications courantes utilisant le contrôle de serrage ultrasonore, on utilise classiquement un traducteur piézoélectrique et le couplage du traducteur à l'élément de vissage est assuré via un fluide de couplage, qui assure la continuité mécanique entre le traducteur et le matériau dans lequel l'onde se propage, pour un bon transfert de l'onde. Une méthode d'analyse de type différentiel est mise en œuvre, qui est basée sur la mesure de la différence du temps de vol de l'onde ultrasonore dans l'élément de serrage non contraint, soit desserré, et contraint. Cette méthode utilise seulement les ondes longitudinales (ondes de compression).

Dans la pratique, le contrôle du serrage des éléments de serrage en mode différentiel est réalisé en deux phases successives:

- la phase de calibrage, où un élément de serrage standard (qui est représentatif de ce que doit être mesuré) est chargé (c'est à dire serré) dans les mêmes conditions que l'élément de serrage à contrôler. Les éléments de serrage sont de la même matière, ont la même géométrie et la même longueur à l'état serré. L'essai d'étalonnage est réalisé en mesurant les temps de vol des ondes ultrasonores sur l'élément de serrage sur lequel sont appliqués des efforts de traction simple, dans le domaine élastique. Ainsi, on obtient des courbes d'étalonnage (abaques) représentant la variation du temps de vol en fonction des tensions mécaniques, c'est-à-dire de la charge appliquée.

- la phase de mesure au cours de laquelle on mesure le temps de vol des ondes ultrasonores dans l'élément de serrage, avant et après serrage. Le temps différentiel mesuré est reporté sur la courbe d'étalonnage et permet de déterminer la contrainte de serrage.

Une mesure précise nécessite donc de connaître soit le temps de vol avant serrage, soit la longueur initiale de la vis pour en déduire le temps de vol différentiel dû au serrage, puis la contrainte, via les courbes d'étalonnage.

On connaît également une méthode de contrôle du serrage par ultrasons, dite méthode bi-onde, qui exploite le temps de vol de deux types d'onde de nature différente : les ondes longitudinales (ondes de compression) et les ondes transversales (ondes de cisaillement), qui ont une célérité/ vitesse de propagation et une sensibilité à la contrainte différente. L'utilisation de ces deux types d'onde permet d'éliminer le besoin de la connaissance de la longueur exacte de l'élément de serrage sans contrainte, ou d'une mesure de contrainte nulle, qui est nécessaire selon la méthode en mode différentiel qui exploite seulement les ondes ultrasonores de compression. Cette méthode est donc particulièrement attrayante lorsque les temps de vol avant serrage ne sont pas connus, où lorsque l'élément de serrage n'a pas pu être pré-mesuré du point de vue métrologique, en vue d'une mesure ultrasonore ultérieure.

La publication « *Apport et limitations des méthodes ultrasonores combinées pour le contrôle de serrage sur assemblages déjà serrés* » de H. Walaszek et P.Bouteille, accessible à l'adresse http://www.ndt.net, fait connaître les principes du contrôle de serrage selon la méthode dite bi-onde, qui exploite les ondes de compression et de cisaillement. Pour mettre en œuvre cette méthode bi-onde, ce document décrit l'utilisation de traducteurs électromagnétiques acoustiques dits EMATs (acronyme anglo-saxon pour Electromagnetic Acoustic Transducers), à la place des traducteurs piézoélectriques, pour générer les ondes de compression et les ondes de cisaillement. Ces dispositifs de génération d'ondes ultrasonores dans l'élément de serrage à contrôler reposent sur un couplage électromagnétique avec l'élément de serrage permettant un couplage fiable, très difficile à garantir en ondes de cisaillement avec les traducteurs piézoélectriques traditionnels. En outre, le couplage électromagnétique supprime la nécessité d'un fluide de couplage traditionnellement utilisé pour transmettre l'impulsion mécanique ultrasonore à partir du traducteur ultrasonore vers l'extrémité de l'élément de serrage. La présence de ce fluide est souvent considérée comme indésirable dans certains secteurs industriels, par exemple dans le cas du contrôle de serrage intégré sur une chaîne de production. Enfin, la présence du fluide de couplage rend les mesures à haute et basses températures délicates à réaliser.

Toutefois, si la technique de contrôle de serrage par ultrasons basée sur la méthode bi-onde est prouvée et prometteuse, elle demande néanmoins d'être améliorée pour pouvoir répondre de façon optimale aux besoins de l'industrie, en particulier en termes de fiabilité, de rapidité de mise en œuvre et de plus grande précision de mesure.

Aussi, un but de l'invention est de proposer un dispositif de contrôle de serrage par ultrason du type précité, qui satisfasse ces besoins.

A cette fin, la présente invention propose un dispositif de contrôle de serrage par ultrasons comprenant un traducteur ultrasonore de type électromagnétique adapté à être couplé électromagnétiquement à un élément de serrage à contrôler pour générer des ondes ultrasonores dans ledit élément de serrage et pour recevoir et analyser un signal de retour, afin de déterminer une première mesure du temps de vol d'ondes ultrasonores longitudinales générées et une seconde mesure du temps de vol d'ondes ultrasonores transversales générées, de façon à en déduire une contrainte de serrage au sein dudit élément de serrage, ledit traducteur étant constitué d'un bobinage plat de mesure d'axe parallèle à l'axe longitudinal dudit élément de serrage à contrôler, apte à générer des courants de Foucault impulsionnels à la surface dudit élément de serrage à contrôler lorsque ledit bobinage est alimenté par au moins une impulsion de courant d'excitation, ledit bobinage étant intégré à un système de génération d'un champ magnétique, ledit système comportant un aimant cylindrique de direction d'aimantation parallèle à l'axe longitudinal dudit élément de serrage à contrôler et disposé au-dessus dudit bobinage de manière que l'axe de révolution dudit aimant se confonde sensiblement avec l'axe dudit bobinage, et un circuit magnétique entourant ledit aimant et ledit bobinage pour guider le champ magnétique généré de manière à ce que les lignes de champ traversent obliquement en direction de l'axe dudit bobinage un plan d'interface entre ledit traducteur et la surface dudit élément de serrage à contrôler, au droit dudit bobinage, l'interaction desdites lignes de champ et des courants de Foucault impulsionnels étant adaptée à générer simultanément les ondes ultrasonores longitudinales et transversales dans ledit élément de serrage à contrôler.

Selon l'invention, ledit circuit magnétique comprend :

- un élément conique constitué d'une première pièce polaire ferromagnétique présentant une première extrémité liée à un premier pôle dudit aimant et une deuxième extrémité libre de section rétrécie, disposée au niveau du plan dudit bobinage plat à l'intérieur dudit bobinage plat,

- une paroi périphérique annulaire de révolution autour dudit axe de révolution constituée d'une deuxième pièce polaire ferromagnatique inclinée en direction de l'axe dudit bobinage plat depuis une première extrémité disposée au niveau du plan d'un deuxième pôle dudit aimant vers une deuxième extrémité libre disposée au niveau du plan dudit bobinage plat à l'extérieur dudit bobinage plat, lesdites deuxièmes extrémités libres desdites première et deuxième pièces polaires définissant un entrefer de canalisation du champ magnétique situé dans le plan dudit bobinage plat, et

- une paroi supérieure cylindrique de révolution autour dudit axe de révolution constituée d'une troisième pièce polaire ferromagnétique liée audit deuxième pôle dudit aimant et solidaire de ladite première extrémité de ladite deuxième pièce polaire.

Avantageusement, ladite paroi périphérique annulaire présente une face interne qui est située radialement à distance dudit aimant et dudit élément conique, de façon à ménager un logement adapté à recevoir un câble d'alimentation du bobinage.

Avantageusement, ladite paroi annulaire périphérique est orientée à sensiblement 45° par rapport audit plan d'interface.

De préférence, lesdites première, deuxième et troisième pièces polaires sont en fer doux.

De préférence, ledit bobinage plat est formé d'un enroulement constitué d'au moins six spires de fil conducteur isolé.

De préférence, ledit aimant est un aimant permanent en Néodyme-Fer-Bore (NdFeB), ou équivalent. En variante, ledit aimant peut être un électroaimant.

L'invention concerne également un procédé de contrôle de serrage par ultrasons d'un élément de serrage, le procédé étant du type exploitant des mesures de temps de vol respectivement d'une onde ultrasonore longitudinale et d'une onde ultrasonore transversale se propageant dans ledit élément de serrage, de façon à en déduire une contrainte de serrage au sein dudit élément de serrage, caractérisé en ce qu'il comprend :

- le couplage d'un dispositif tel que décrit ci-dessus avec ledit élément de serrage pour générer simultanément lesdites ondes ultrasonores longitudinales et transversales se propageant dans ledit élément de serrage ;

- la mesure des temps de vol respectifs desdites ondes ultrasonores longitudinales et transversales générées à partir des échos de retour desdites ondes ultrasonores longitudinales et transversales dans un signal de retour reçu par ledit traducteur ;

- le calcul du rapport des temps de vol mesurés des ondes ultrasonores transversales et longitudinales ;

- la détermination de ladite contrainte de serrage à partir du rapport des temps de vol mesurés, par la lecture de la contrainte de serrage correspondant au rapport des temps de vol obtenu, sur une courbe d'étalonnage du rapport des temps de vol en fonction de la contrainte de serrage.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la Figure 1 est une vue schématique du dispositif conforme à l'invention couplé à une vis, pour la génération simultanée d'ondes de compression et de cisaillement dans ladite vis ;

- la Figure 2 est un exemple de courbe d'étalonnage utilisée pour la détermination de la contrainte de serrage dans la vis à partir du dispositif de l'invention.

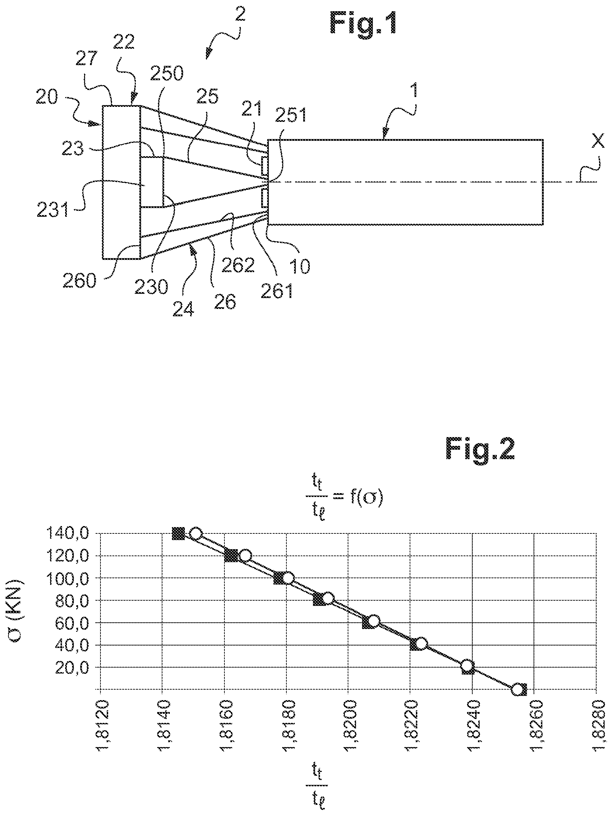

L'élément de serrage 1 à contrôler grâce au dispositif 2 de l'invention comporte une vis dans l'exemple de la figure 1, qui présente une tête de vis 10. Le dispositif 2 comprend un traducteur 20, de type électromagnétique dit EMAT ou électro-magnéto-acoustique, destiné à être disposé sur la tête de vis 10 de façon à permettre d'émettre et de recevoir un signal ultrasonore dans la vis 1 et ceci, sans fluide de couplage acoustique. Le traducteur 20 est connecté à des moyens d'excitation impulsionnelle et de réception-amplification et d'analyse du signal de retour, non représentés.

Le traducteur 20 est disposé sur la tête de vis 10 et est adapté pour envoyer des ondes ultrasonores vers l'extrémité de la vis opposée à la tête de vis et, plus précisément, pour envoyer simultanément des ondes longitudinales (ondes de compression) et des ondes transversales (ondes de cisaillement) selon les principes exposés ci-après.

Les ondes transmises dans la vis sont définies par rapport au plan d'interface entre la vis et le traducteur, qui sert de référence pour repérer la polarisation des ondes transversales et longitudinales.

Le traducteur 20 comprend un bobinage plat 21, qui s'étend dans un plan, constitué d'une bobine de fil électriquement conducteur, dite solénoïde ou « bobine de courants de Foucault »), destiné à être placé à la surface de la tête de vis 10 avec l'axe du bobinage, soit l'axe perpendiculaire au plan du bobinage 21, qui traverse le bobinage 21 en son centre, parallèle à l'axe longitudinal X de la vis. Le bobinage plat 21 est par exemple formé d'un enroulement constitué de six spires de fil conducteur isolé. Le bobinage 21 permet de générer des courants électriques impulsionnels de forte intensité à la surface du matériau électriquement conducteur de la tête de vis, lorsqu'il est alimenté par l'intermédiaire des moyens d'excitation impulsionnelle de haute puissance du traducteur. Les courants impulsionnels générés dits « courants de Foucault » sont contenus dans des plans parallèles à la surface du matériau et sont principalement concentrés dans une épaisseur appelée conventionnellement épaisseur de peau. Ils sont destinés à interagir avec un champ magnétique permanent créé par un système de génération d'un champ magnétique du traducteur 20 dans lequel le bobinage 21 est intégré.

Le bobinage 21 est intégré dans un système 22 de génération d'un champ magnétique du traducteur 20, qui présente la particularité de pouvoir créer dans la zone située sous le bobinage, soit au niveau du plan d'interface avec la surface de la tête de vis, un champ magnétique incliné en direction de l'axe longitudinal de la vis et décomposable en une composante colinéaire à l'axe X et une composante normale à l'axe X. La combinaison des courants de Foucault dans le matériau de la vis et du champ magnétique généré provoque l'apparition d'une force dite force de Lorentz à la surface du matériau se traduisant par la propagation d'une onde ultrasonore dans le matériau. Grâce à l'orientation relative des courants de Foucault, parallèles à la surface du matériau et du champ magnétique incliné, le traducteur 20 permet de générer simultanément une onde ultrasonore impulsionnelle longitudinale et une onde ultrasonore impulsionnelle transversale, qui se propagent simultanément dans la vis. En particulier, les ondes transversales sont générées par l'interaction des courants des courants de Foucault parallèles à la surface du matériau conducteur de la vis avec la composante du champ magnétique incliné colinéaire à l'axe X et les ondes longitudinales sont générées par l'interaction des courants de Foucault parallèles à la surface du matériau conducteur avec la composante du champ magnétique incliné normale à l'axe X.

En outre, dans les matériaux ferromagnétiques, une force magnétostrictive impulsionnelle, colinéaire au champ magnétique impulsionnel créé par le bobinage lorsqu'il est alimenté, se combine avec la force de Lorentz et participe à la génération des ondes ultrasonores.

La combinaison avantageuse de la distribution spatiale du champ magnétique permanent et des courants de Foucault impulsionnels permet de générer simultanément des ondes ultrasonores longitudinales et transversales dans une même zone de la vis à contrôler. Cette simultanéité de génération des ondes longitudinales et transversales permet d'assurer l'insonification d'une zone identique de la vis contrôlée, ce qui présente l'avantage d'augmenter la sensibilité de la mesure et de réduire les dispersions de mesure du temps de vol ultrasonore des deux ondes longitudinale et transversale, qui sont générées simultanément dans la vis.

Ces ondes qui se propagent dans la vis sont réfléchies par l'extrémité de la vis et leur écho de retour est détecté par le traducteur 20, par effet inverse.

Le système 22 de génération du champ magnétique du traducteur 20 permettant de créer le champ magnétique incliné au niveau du plan d'interface sous le bobinage 21, comprend pour ce faire un aimant cylindrique 23, de direction d'aimantation parallèle à l'axe longitudinal X de la vis à contrôler. L'aimant 23 est disposé au-dessus du bobinage 21, de manière que l'axe de révolution de l'aimant 23 se confonde sensiblement avec l'axe du bobinage 21. L'aimant 23 peut être un aimant permanent, préférentiellement en Néodyme-Fer-Bore (NdFeB), ou un électroaimant.

Le système 22 de génération du champ magnétique du traducteur 20 comprend également un circuit magnétique 24 constitué de masses polaires entourant l'aimant 23 et le bobinage 21 pour guider le champ magnétique généré par l'aimant de manière à générer une distribution du champ magnétique dans la vis à contrôler apte à interagir de manière avantageuse avec les courants de Foucault générés par le bobinage 21 dans la vis.

Ainsi, le circuit magnétique 24 associé à l'aimant permanent 23 est conformé de sorte que les lignes de champ traversent obliquement, en direction de l'axe du bobinage 21, le plan d'interface entre le traducteur 20 et la surface de la vis 1 à contrôler, au droit du bobinage 23, de sorte que l'interaction de ces lignes de champ avec les courants de Foucault impulsionnels génère simultanément les ondes ultrasonores longitudinales et transversales dans la vis 1 à contrôler, comme expliqué plus haut.

Plus précisément, pour obtenir une telle distribution des lignes de champs, le circuit magnétique 24 comprend un élément conique 25, constitué d'une première pièce polaire ferromagnétique, qui présente une première extrémité 250 liée à un premier pôle 230 de l'aimant permanent 23 et une deuxième extrémité libre 251, de section rétrécie, disposée dans le plan du bobinage plat 21 à l'intérieur de ce dernier. Autrement dit, l'élément conique 25 est disposé entre le premier pôle de l'aiment permanent 23 et le bobinage plat 21 de sorte que son axe soit aligné avec l'axe de révolution de l'aimant 23 d'une part, et l'axe du bobinage 21, d'autre part.

Le circuit magnétique 24 comprend également une paroi périphérique annulaire 26 de révolution autour de l'axe de révolution de l'aimant permanent 23, qui est constituée d'une deuxième pièce polaire ferromagnétique inclinée en direction de l'axe du bobinage plat 21 depuis une première extrémité 260 disposée au niveau du plan d'un deuxième pôle 231 de l'aimant permanent 23, opposé au premier pôle 230, vers une deuxième extrémité libre 261 disposée dans le plan du bobinage plat 21 à l'extérieur de ce dernier, de sorte que les deuxièmes extrémités libres respectives 251 et 261 des première et deuxième pièces polaires 25 et 26 définissent un entrefer de canalisation du champ magnétique généré par l'aimant 23, situé dans le plan du bobinage plat 21.

La paroi annulaire périphérique 26 est orientée à sensiblement 45° par rapport au plan d'interface avec la vis. Une telle orientation est particulièrement favorable pour obtenir une distribution du champ magnétique dans la vis qui soit apte à interagir de manière avantageuse avec les courants de Foucault impulsionnels de façon à générer à la fois des ondes ultrasonores transversales et des ondes ultrasonores longitudinales dans la vis à contrôler.

En outre, la paroi périphérique annulaire 26 du circuit magnétique présente une face interne 262 qui est située radialement à distance de l'aimant 23 et de l'élément conique 25, de façon à ménager un logement 28 adapté à recevoir le câblage nécessaire à l'alimentation du bobinage 21. Le circuit magnétique 24 comprend enfin une paroi supérieure cylindrique 27 de révolution autour de l'axe de révolution de l'aimant permanent 23, qui est constituée d'une troisième pièce polaire ferromagnétique liée au deuxième pôle 231 de l'aimant 23 et solidaire de la première extrémité 260 de la deuxième pièce polaire 26 du circuit magnétique.

Des pièces polaires en fer doux sont préférentiellement utilisées pour former le circuit magnétique 24 constitué de l'élément conique central 25, de la paroi périphérique annulaire 26 et de la paroi supérieure cylindrique 27.

Le traducteur 20 permet de mettre en œuvre la méthode bi-onde pour l'application au contrôle de serrage, qui exploite les mesures des temps de vol des deux types d'ondes transversales et longitudinales générées simultanément pour obtenir une mesure de contrainte sur un élément déjà serré, et sur un élément dont la longueur n'est pas connue avec précision. Cette méthode permet de supprimer la nécessité de recourir à des vis pré-calibrées, c'est-à-dire dont la longueur ou le temps de vol des ondes ultrasonores au repos, soit avant serrage, sont connus.

On construit une courbe d'étalonnage à partir des mesures des temps de vol de l'onde longitudinale et de l'onde transversale dans une vis d'étalonnage pour différentes contraintes de serrage appliquées à la vis, ladite courbe établissant la variable du rapport des temps de vol de l'onde longitudinale et de l'onde transversale sur un premier axe en fonction de la contrainte de serrage, sur le deuxième axe. La figure 2 illustre un exemple

$$\frac{t_t}{t_l} = f(\sigma)$$

d'une telle courbe d'étalonnage fournissant

le rapport $\dfrac{t_t}{t_l}$ entre les temps de vol $t_t$ et $t_l$, respectivement de l'onde transversale et de l'onde longitudinale dans une vis d'étalonnage donnée en fonction de la contrainte $\sigma$ appliquée sur cette vis, exprimée en kN.

Ainsi, conformément à l'invention, le contrôle du serrage d'une vis à contrôler déjà serrée peut se faire sans desserrage. Le traducteur 20 décrit plus haut est disposé sur la tête de vis, de manière à envoyer simultanément les ondes ultrasonores transversales et longitudinales dans la vis à contrôler, depuis la tête de vis vers l'extrémité de la vis. Ces ondes ultrasonores, respectivement transversale et longitudinale, se propagent et sont réfléchies par l'extrémité de la vis. Les échos de retour respectifs des ondes longitudinales et transversales générées sont marqués sur le signal de retour reçu par le traducteur 20 par des pics qui apparaissent au bout d'un temps plus ou moins long en fonction du temps de vol de l'onde longitudinale et de l'onde transversale.

La mesure de la contrainte de serrage appliquée à la vis à contrôler consiste alors à exploiter la mesure de ces temps de vol en calculant le rapport entre ces temps de vol mesurés pour les deux types d'ondes émises simultanément, puis en déterminant la contrainte de serrage correspondant au rapport des temps de vol obtenu, sur une courbe d'étalonnage du rapport des temps de vol en fonction de la contrainte, telle qu'illustrée à la figure 2. On obtient ainsi la mesure de la contrainte de serrage siégeant dans la vis. Les avantages de cette méthode sont notamment une plus grande précision de mesure, grâce à l'insonification simultanée d'une même zone de l'élément à contrôler avec des ondes longitudinales et transversales, ainsi qu'une plus grande rapidité de mesure, grâce à l'utilisation du traducteur unique permettant de générer simultanément les ondes longitudinales et transversales.

## Revendications

**1.** Dispositif (2) de contrôle de serrage par ultrasons comprenant un traducteur (20) ultrasonore de type électromagnétique adapté à être couplé électromagnétiquement à un élément de serrage (1) à contrôler pour générer des ondes ultrasonores dans ledit élément de serrage (1) et pour recevoir et analyser un signal de retour, afin de déterminer une première mesure du temps de vol d'ondes ultrasonores longitudinales générées et une seconde mesure du temps de vol d'ondes ultrasonores transversales générées, de façon à en déduire une contrainte de serrage au sein dudit élément de serrage, ledit traducteur étant constitué d'un bobinage plat (21) de mesure d'axe parallèle à l'axe longitudinal (X) dudit élément de serrage à contrôler (1), apte à générer des courants de Foucault impulsionnels à la surface dudit élément de serrage à contrôler lorsque ledit bobinage (21) est alimenté par au moins une impulsion de courant d'excitation, ledit bobinage (21) étant intégré à un système de génération d'un champ magnétique (22), ledit système (22) comportant un aimant (23) cylindrique de direction d'aimantation parallèle à l'axe longitudinal (X) dudit élément de serrage à contrôler et disposé au-dessus dudit bobinage (21) de manière que l'axe de révolution dudit aimant (23) se confonde sensiblement avec l'axe dudit bobinage (21), **caractérisé en ce qu'**un circuit magnétique entoure ledit aimant (23) et ledit bobinage (21) pour guider le champ magnétique généré de manière à ce que les lignes de champ traversent obliquement en direction de l'axe dudit bobinage (21) un plan d'interface entre ledit traducteur et la surface dudit élément de serrage à contrôler, au droit dudit bobinage, l'interaction desdites lignes de champ et des courants de Foucault impulsionnels étant adaptée à générer simultanément les ondes ultrasonores longitudinales et transversales dans ledit élément de serrage à contrôler (1), ledit circuit magnétique comprenant :

- un élément conique (25) constitué d'une première pièce polaire ferromagnétique présentant une première extrémité (250) liée à un premier pôle (230) dudit aimant et une deuxième extrémité libre (251) de section rétrécie, disposée au niveau du plan dudit bobinage plat (21) à l'intérieur dudit bobinage plat,
- une paroi périphérique annulaire (26) de révolution autour dudit axe de révolution constituée d'une deuxième pièce polaire ferromagnatique inclinée en direction de l'axe dudit bobinage plat (21) depuis une première extrémité (260) disposée au niveau du plan d'un deuxième pôle (231) dudit aimant (23) vers une deuxième extrémité libre (261) disposée au niveau du plan dudit bobinage plat (21) à l'extérieur dudit bobinage plat (21), lesdites deuxièmes extrémités libres (251, 261) desdites première et deuxième pièces polaires définissant un entrefer de canalisation du champ magnétique situé dans le plan dudit bobinage plat (21), et
- une paroi supérieure cylindrique (27) de révolution autour dudit axe de révolution constituée d'une troisième pièce polaire ferromagnétique liée audit deuxième pôle (231) dudit aimant et solidaire de ladite première extrémité (260) de ladite deuxième pièce polaire.

**2.** Dispositif selon la revendication 1, **caractérisé en ce que** ladite paroi périphérique annulaire (26) présente une face interne (262) qui est située radialement à distance dudit aimant et dudit élément conique, de façon à ménager un logement adapté à recevoir un câble d'alimentation du bobinage.

**3.** Dispositif selon la revendication 1 ou 2, **caractérisé en ce que** ladite paroi périphérique annulaire (26) est orientée à sensiblement 45° par rapport audit plan d'interface.

**4.** Dispositif selon l'une quelconque des revendications 1 à 3, **caractérisé en ce que** lesdites première, deuxième et troisième pièces polaires sont en fer doux.

5. Dispositif selon l'une quelconque des revendications précédentes, **caractérisé en ce que** ledit bobinage plat (21) est formé d'un enroulement constitué d'au moins six spires de fil conducteur isolé.

6. Dispositif selon l'une quelconque des revendications précédentes, **caractérisé en ce que** ledit aimant (23) est un aimant permanent en NdFeB.

7. Procédé de contrôle de serrage par ultrasons d'un élément de serrage (1), le procédé étant du type exploitant des mesures de temps de vol respectivement d'une onde ultrasonore longitudinale et d'une onde ultrasonore transversale se propageant dans ledit élément de serrage (1), de façon à en déduire une contrainte de serrage au sein dudit élément de serrage, **caractérisé en ce qu**'il comprend :

- le couplage d'un dispositif (2) selon l'une quelconque des revendications 1 à 6 avec ledit élément de serrage (1) pour générer simultanément lesdites ondes ultrasonores longitudinales et transversales se propageant dans ledit élément de serrage ;
- la mesure des temps de vol respectifs desdites ondes ultrasonores longitudinales et transversales générées à partir des échos de retour desdites ondes ultrasonores longitudinales et transversales dans un signal de retour reçu par ledit traducteur (20) ;
- le calcul du rapport $(\frac{t_t}{t_l})$ des temps de vol mesurés des ondes ultrasonores transversales et longitudinales ;
- la détermination de ladite contrainte de serrage à partir du rapport des temps de vol mesurés, par la lecture de la contrainte de serrage correspondant au rapport des temps de vol obtenu, sur une courbe d'étalonnage $(\frac{t_t}{t_l} = f(\sigma))$ du rapport des temps de vol $(\frac{t_t}{t_l})$ en fonction de la contrainte de serrage ($\sigma$).

**Patentansprüche**

1. Vorrichtung (2) zur Prüfung der Klemmung durch Ultraschall, einen Ultraschallwandler (20) vom elektromagnetischen Typ umfassend, der angepasst ist, um elektromagnetisch an ein zu prüfendes Klemmelement (1) gekoppelt zu werden, um Ultraschallwellen im Klemmelement (1) zu erzeugen und um ein Rückmeldungssignal zu empfangen und zu analysieren, um eine erste Laufzeitmessung von erzeugten Longitudinalultraschallwellen und eine zweite Laufzeitmessung von erzeugten Transversalultraschallwellen zu ermitteln, in der Art, um davon eine Klemmspannung innerhalb des Klemmelements abzuleiten, wobei der Wandler aus einer flachen Wicklung (21) mit einer Achse parallel zur Längsachse (X) des zu prüfenden Klemmelements (1) besteht, die geeignet ist, an der Oberfläche des zu prüfenden Klemmelements Impulswirbelströme zu erzeugen, wenn die Wicklung (21) mit mindestens einem Erregerstromimpuls versorgt wird, wobei die Wicklung (21) in einem System zur Erzeugung eines Magnetfelds (22) integriert ist, wobei das System (22) einen zylindrischen Magneten (23) mit zur Längsachse (X) des zu prüfenden Klemmelements parallelen Magnetisierungsrichtung enthält und über der Wicklung (21) so angeordnet ist, dass die Rotationsachse des Magneten (23) im Wesentlichen die Achse der Wicklung (21) überdeckt, **dadurch gekennzeichnet, dass** ein magnetischer Kreis den Magneten (23) und die Wicklung (21) umgibt, um das erzeugte Magnetfeld so zu führen, dass die Feldlinien schräg in Richtung der Achse der Wicklung (21) eine Schnittstellenebene zwischen dem Wandler und der Oberfläche des zu prüfenden Klemmelements durchdringen, gegenüber der Wicklung, wobei die Wechselwirkung der Feldlinien und der Impulswirbelströme angepasst ist, um gleichzeitig die Longitudinal- und Transversalultraschallwellen im zu prüfenden Klemmelement (1) zu erzeugen, der magnetische Kreis umfasst:

- ein konisches Element (25), das aus einem ersten ferromagnetischen Polstück besteht, das ein erstes Ende (250) aufweist, das mit einem ersten Pol (230) des Magneten und einem zweiten freien Ende (251) mit verengtem Querschnitt verbunden ist, das im Bereich der Ebene der flachen Wicklung (21) im Innern der flachen Wicklung angeordnet ist,
- eine ringförmige Außenwand (26), die die Rotationsachse umgibt, die aus einem zweiten ferromagnetischen Polstück besteht, das in Richtung der Achse der flachen Wicklung (21) von einem ersten Ende (260) aus geneigt ist, das im Bereich der Ebene eines zweiten Pols (231) des Magneten (23) zu einem zweiten freien Ende (261) angeordnet ist, das im Bereich der Ebene der flachen Wicklung (21) außerhalb der flachen Wicklung (21) angeordnet ist, wobei die zweiten freien Enden (251, 261) der ersten und zweiten Polstücke einen Kanalisierungsspalt des Magnetfelds definieren, in der Ebene der flachen Wicklung (21) liegend, und

- eine zylindrische obere Wand (27), die die Rotationsachse umgibt, die aus einem dritten ferromagnetischen Polstück besteht, das mit dem zweiten Pol (231) des Magneten verbunden ist und einstückig mit dem ersten Ende (260) des zweiten Polstücks ist.

2. Vorrichtung nach Anspruch 1, **dadurch gekennzeichnet, dass** die ringförmige Außenwand (26) eine Innenseite (262) aufweist, die radial in einem Abstand vom Magneten und dem konischen Element liegt, in der Art, um eine Halterung zu bilden, die angepasst ist, um ein Stromversorgungskabel der Wicklung aufzunehmen.

3. Vorrichtung nach Anspruch 1 oder 2, **dadurch gekennzeichnet, dass** die ringförmige Außenwand (26) im Wesentlichen mit 45° im Bezug auf die Schnittstellenebene ausgerichtet ist.

4. Vorrichtung nach einem der Ansprüche 1 bis 3, **dadurch gekennzeichnet, dass** die ersten, zweiten und dritten Polstücke aus Weicheisen sind.

5. Vorrichtung nach einem der vorhergehenden Ansprüche, **dadurch gekennzeichnet, dass** die flache Wicklung (21) in einem Wickelverfahren gebildet ist, das aus mindestens sechs Windungen mit isoliertem Leitungsdraht besteht.

6. Vorrichtung nach einem der vorhergehenden Ansprüche, **dadurch gekennzeichnet, dass** der Magnet (23) ein Permanentmagnet aus NdFeB ist.

7. Verfahren zur Prüfung der Klemmung eines Klemmelements (1) durch Ultraschall, wobei das Verfahren vom Typ ist, der die Laufzeitmessungen jeweils einer Longitudinalultraschallwelle und einer Transversalultraschallwelle, die sich im Klemmelement (1) ausbreiten, auswertet, in der Art, um davon eine Klemmspannung innerhalb des Klemmelements abzuleiten, **dadurch gekennzeichnet, dass** es umfasst:

- die Kopplung einer Vorrichtung (2), nach einem der Ansprüche 1 bis 6, mit dem Klemmelement (1), um gleichzeitig die Longitudinal- und Transversalultraschallwellen zu erzeugen, die sich im Klemmelement ausbreiten;
- die jeweiligen Laufzeitmessungen der Longitudinal- und Transversalultraschallwellen, die aus den Rückkehrechos der Longitudinal- und Transversalultraschallwellen in einem vom Wandler (20) empfangenen Rückmeldungssignal erzeugt werden;
- die Berechnung des Verhältnisses $\left(\frac{t_t}{t_l}\right)$ der gemessenen Laufzeit der Transversal- und Longitudinalultraschallwellen;
- die Ermittlung der Klemmspannung, ausgehend vom Verhältnis der gemessenen Laufzeit, durch Ablesung der Klemmspannung, die dem erhaltenen Verhältnis der Laufzeit entspricht, auf einer Auswertekurve $\left(\frac{t_t}{t_l} = f(\sigma)\right)$ des

Verhältnisses der Laufzeit $\left(\frac{t_t}{t_l}\right)$ in Abhängigkeit von der Klemmspannung ($\sigma$).

**Claims**

1. A device (2) for controlling tightening by ultrasound comprising an electromagnetic ultrasonic transducer (20) suitable for being electromagnetically coupled to a tightening element (1) to be controlled with a view to generating ultrasonic waves in said tightening element (1) and with a view to receiving and analyzing a return signal, in order to determine a first measurement of the time of flight of generated longitudinal ultrasonic waves and a second measurement of the time of flight of generated transverse ultrasonic waves, so as to deduce therefrom a tightening stress within said tightening element, said transducer being formed from a flat coil (21) of measurement axis parallel to the longitudinal axis (X) of said tightening element to be controlled (1), able to generate pulsed eddy currents at the surface of said tightening element to be controlled when said coil (21) is supplied with at least one exciting current pulse, said coil (21) being integrated into a system (22) for generating a magnetic field, said system (22) comprising a cylindrical magnet (23) of magnetization direction parallel to the longitudinal axis (X) of said tightening element to be controlled and placed above said coil (21) so that the axis of revolution of said magnet (23) is substantially coincident with the axis of said coil (21), **characterized in that** a magnetic circuit encircles said magnet (23) and said coil (21) with a view to guiding the generated magnetic field so that the field lines pass through obliquely in the direction of the axis of said coil (21) an interface plane between said transducer and the surface of said tightening element to be controlled, plumb with said coil, the interaction of said field lines and of the pulsed eddy currents being suitable for simultaneously generating the longitudinal and transverse ultrasonic waves in said tightening element to be controlled (1),

said magnetic circuit comprising:

- a conical element (25) formed by a first ferromagnetic polar part having a first end (250) connected to a first pole (230) of said magnet and a free second end (251) of narrow cross section, placed in the plane of said flat coil (21) inside said flat coil,

- an annular peripheral wall (26) of revolution about said axis of revolution, said wall being formed by a second ferromagnetic polar part that is inclined in the direction of the axis of said flat coil (21) from a first end (260) placed in the plane of a second pole (231) of said magnet (23) to a free second end (261) placed in the plane of said flat coil (21) outside said flat coil (21), said free second ends (251, 261) of said first and second polar parts defining a gap for channeling the magnetic field located in the plane of said flat coil (21), and

- a cylindrical upper wall (27) of revolution about said axis of revolution, said wall being formed by a third ferromagnetic polar part connected to said second pole (231) of said magnet and securely fastened to said first end (260) of said second polar part.

2. The device as claimed in claim 1, **characterized in that** said annular peripheral wall (26) has an internal face (262) that is located radially away from said magnet and from said conical element, so as to form a housing suitable for receiving a power-supply cable of the coil.

3. The device as claimed in claim 1 or 2, **characterized in that** said annular peripheral wall (26) is oriented at substantially 45° with respect to said interface plane.

4. The device as claimed in any one of claims 1 to 3, **characterized in that** said first, second and third polar parts are made of soft iron.

5. The device as claimed in any one of the preceding claims, **characterized in that** said flat coil (21) is formed from a winding consisting of at least six turns of insulated conductive wire.

6. The device as claimed in any one of the preceding claims, **characterized in that** said magnet (23) is a permanent magnet made of NdFeB.

7. A method for controlling by ultrasound the tightening of a tightening element (1), the method being of the type exploiting measurements of the time of flight respectively of a longitudinal ultrasonic wave and of a transverse ultrasonic wave that propagate through said tightening element (1), so as to deduce therefrom a tightening stress within said tightening element, **characterized in that** it comprises:

- coupling a device (2) as claimed in any one of claims 1 to 6 to said tightening element (1) with a view to simultaneously generating said longitudinal and transverse ultrasonic waves that propagate through said tightening element;

- measuring respective times of flight of said generated longitudinal and transverse ultrasonic waves from return echoes of said longitudinal and transverse ultrasonic waves in a return signal received by said transducer (20);

- computing the ratio $(\dfrac{t_t}{t_l})$ of the measured times of flight of the transverse and longitudinal ultrasonic waves;

- determining said tightening stress from the ratio of the measured times of flight, by reading the tightening stress corresponding to the obtained ratio of the times of flight, from a calibration curve $(\dfrac{t_t}{t_l} = f(\sigma))$ of the ratio of the times of flight $(\dfrac{t_t}{t_l})$ as a function of tightening stress $((\sigma))$.

## Fig.1

## Fig.2

$$\frac{t_t}{t_\ell} = f(\sigma)$$